## Europäisches Patentamt
## European Patent Office
## Office européen des brevets

(19)

(11) Veröffentlichungsnummer: **0 065 753**
**A2**

(12) # EUROPÄISCHE PATENTANMELDUNG

(21) Anmeldenummer: **82104385.8**

(22) Anmeldetag: **19.05.82**

(51) Int. Cl.³: **B 29 D 27/04**
**B 29 F 1/08, B 29 C 5/04**

(30) Priorität: **22.05.81 DE 3120519**

(43) Veröffentlichungstag der Anmeldung:
**01.12.82 Patentblatt 82/48**

(84) Benannte Vertragsstaaten:
**BE DE FR GB**

(71) Anmelder: **METZELER SCHAUM GMBH**
**Donaustrasse 51**
**D-8940 Memmingen(DE)**

(72) Erfinder: **Bokelmann, Horst**
**Memelstrasse 10a**
**D-8944 Grönenbach(DE)**

(74) Vertreter: **Michelis, Theodor, Dipl.-Ing.**
**Westendstrasse 131**
**D-8000 München 2(DE)**

(54) **Formschaumanlage.**

(57) Bei einer Formschaumanlage mit mehreren, auf einem drehbaren Tisch (1) angeordneten Formen (2) sind mindestens 2 Rechner (11, 12) vorgesehen Der erste Rechner (11) öffnet und schließt die einzelnen Formen (2) positionsabhängig und heizt bzw. kühlt jede Form (2) zeitabhängig; der zweite Rechner (12) dient zur positionsabhängigen Steuerung der Einfüllvorrichtung (65).

FIG.1

Croydon Printing Company Ltd

EP 0 065 753 A2

METZELER SCHAUM GMBH

Memmingen

München, den 17.5.1982

Unser Zeichen: MS 163 P 81 EP

## Formschaumanlage

Die Erfindung betrifft eine Formschaumanlage der im Oberbegriff des Anspruchs 1 angegebenen Gattung.

Eine solche Formschaumanlage geht aus der DE-OS 2 820 802 hervor und weist mehrere, auf einem drehbaren Tisch angeordnete Formen, eine Heizung und eine Kühlung für jede Form, sowie eine stationäre Vorrichtung zur Einfüllung einer vorgegebenen Menge eines schäumbaren Reaktionsgemisches aus mehreren Ausgangskomponenten in jede Form auf.

Bei der Drehung des Tisches werden die einzelnen Formen in eine Füllstellung gebracht, in der das schäumbare Reaktionsgemisch eingefüllt wird. Dann werden die Formen geschlossen und zunächst durch Dampf erwärmt und anschließend durch unter Überdruck stehendes Kühlwasser gekühlt. Die einzelnen Arbeitsgänge müssen manuell eingeleitet werden, so daß die Arbeitsgeschwindigkeit dieser Formschaumanlage nicht sehr hoch ist. Außerdem ist es im allgemeinen nicht möglich, die verschiedenen Formen einer solchen Formschaumanlage mit unterschiedlichen Reaktionsgemischen zu beschicken.

Der Erfindung liegt deshalb die Aufgabe zugrunde, einen Formschaumanlage der angegebenen Gattung zu schaffen, bei der die oben erwähnten Nachteile nicht auftreten.

Insbesondere soll eine Formschaumanlage vorgeschlagen werden, die weitgehend automatisch arbeitet und auch die Beschickung der Formen mit unterschiedlichen Reaktionsgemischen ermöglicht.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß die verschiedenen Verarbeitungsschritte jeder einzelnen Form, nämlich das Öffnen und Schließen sowie das Heizen und Kühlen, selbsttätig mittels eines ersten Rechners durchgeführt werden, wobei die Form bei Erreichen einer bestimmten Position geschlossen wird, und zwar im allgemeinen unmittelbar nach dem Füllen. Mit einer bestimmten zeitlichen Verzögerung erfolgt dann die Heizung der Form durch Dampf, die für eine vorgegebene Zeitspanne aufrechterhalten wird. Anschließend wird die Form bei Erreichen einer bestimmten zweiten Lage wieder geöffnet, wonach zeitabhängig die Kühlung eingeleitet wird. Die Kühlung wird beendet, wenn die Form eine weitere, bestimmte Lage erreicht hat.

Diese Maßnahmen können für jede Form, die sich auf dem Tisch befindet, frei vorgegeben werden, so daß jede Form individuell gesteuert werden kann.

Die positionsabhängige Steuerung der Einfüllvorrichtung erfolgt mittels eines zweiten Rechners, der die Dosierpumpen der verschiedenen Ausgangskomponenten des schäubaren Reaktionsgemisches beaufschlagt. Ist die Verstellung der Dosierpumpen abgeschlossen, so wird der Füllvorgang freigegeben und die in der Füllstellung befindliche Form mit der entsprechenden "Rezeptureinstellung" gefüllt.

Dabei besteht die Möglichkeit, noch während des laufenden Füllvorgangs auf die nächste Rezeptureinstellung überzugehen, indem noch während des Füllvorgangs die Dosierpumpen entsprechend verstellt werden.

Nach einer bevorzugten Ausführungsform ist ein Master-Rechner vorgesehen, der den außerhalb des Tisches ablaufenden Prozeß steuert und den beiden anderen Rechnern übergeordnet ist. Die Hauptaufgabe des Master-Rechners liegt darin, alle Prozeßabläufe zu koordinieren und alle für den Produktionsprozeß notwendigen, variablen Parameter zu verwalten. Anhand dieser Produktionsparameter muß der Master-Rechner zum richtigen Zeitpunkt Steuerfunktionen und Schalthandlungen ausführen und den beiden anderem Rechnern die entsprechenden Daten überspielen, damit diese ebenfalls ihre Steuerfunktionen und Schalthandlungen ausführen können.

Enthält beispielsweise ein Tisch 24 unterschiedliche Formen, so können maximal 24 unterschiedliche Formteile mit z. B. unterschiedlichen Füllzeiten, Heizzeiten, Kühlzeiten und Rezepturen produziert werden.

Die Erfindung wird im folgenden anhand von Ausführungsbeispielen unter Bezugnahme auf die beiliegenden, schematischen Zeichnungen näher erläutert. Es zeigen

Fig. 1 eine Draufsicht auf eine Formschaumanlage mit einem Teil der Formen,

Fig. 2 ein Prinzipschema der drei Rechner und der zu steuernden Komponenten der Formschaumanlage,

Fig. 3 ein Prinzipschema der Zu- und Ableitungen für die Heiz- und Kühlmedien mit den entsprechenden exter - nen Versorgungseinrichtungen,

Fig. 4 eine perspektivische Ansicht einer Form von hinten im aufgeklappten Zustand mit einer Darstellung der Kühlrohre, und

Fig. 5 ein Prinzipschema einer Form und des sie steuernden ersten Rechners.

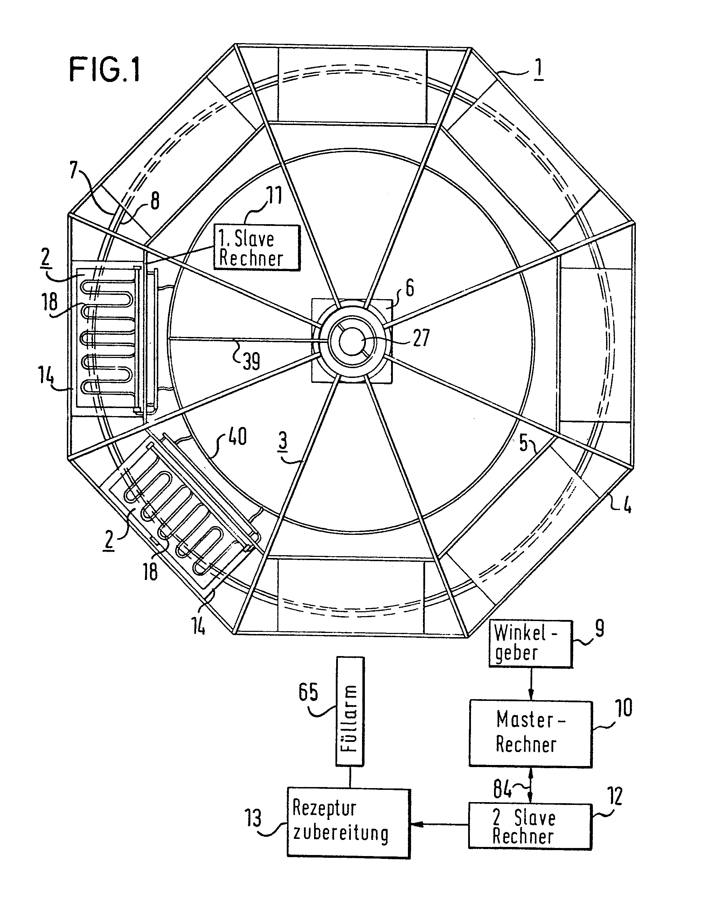

Wie aus Fig. 1 ersichtlich ist, weist eine Formschaumanlage einen symmetrisch aufgebauten, beispielsweise achteckig ausgebildeten Tisch 1 auf, der an seinem Außenumfang acht Formen 2 aufnimmt . Bei Bedarf kann der Tisch jedoch auch mehr oder weniger Formen, beispielsweise sechs oder zwölf Formen, aufnehmen.

Der Tisch 1 besteht im wesentlichen aus einem sternförmigen Grundrahmen 3 mit entsprechenden Querverstrebungen 4 und 5 sowie einer zentralen Knotenpunktsplatte 6. Auf der Unterseite des Grundrahmens 3 ist in seinem äußeren Bereich etwa unterhalb der Formen 2 eine kreisförmig geschlossene Laufschiene 7 mit einem Zahnkranz 8 auf der Innenseite der Laufschiene 7 angebracht. Diese Laufschiene 7 ist auf mehrere Laufräder aufgelegt, die über im Fundament verankerte Stützen gehalten werden; die Laufschiene 7 wird durch einen mit seinem Antriebszahnrad in den Zahnkranz 8 eingreifenden Antriebsmotor angetrieben, so daß sich der Tisch 1 mit vorgegebener Geschwindigkeit drehen kann.

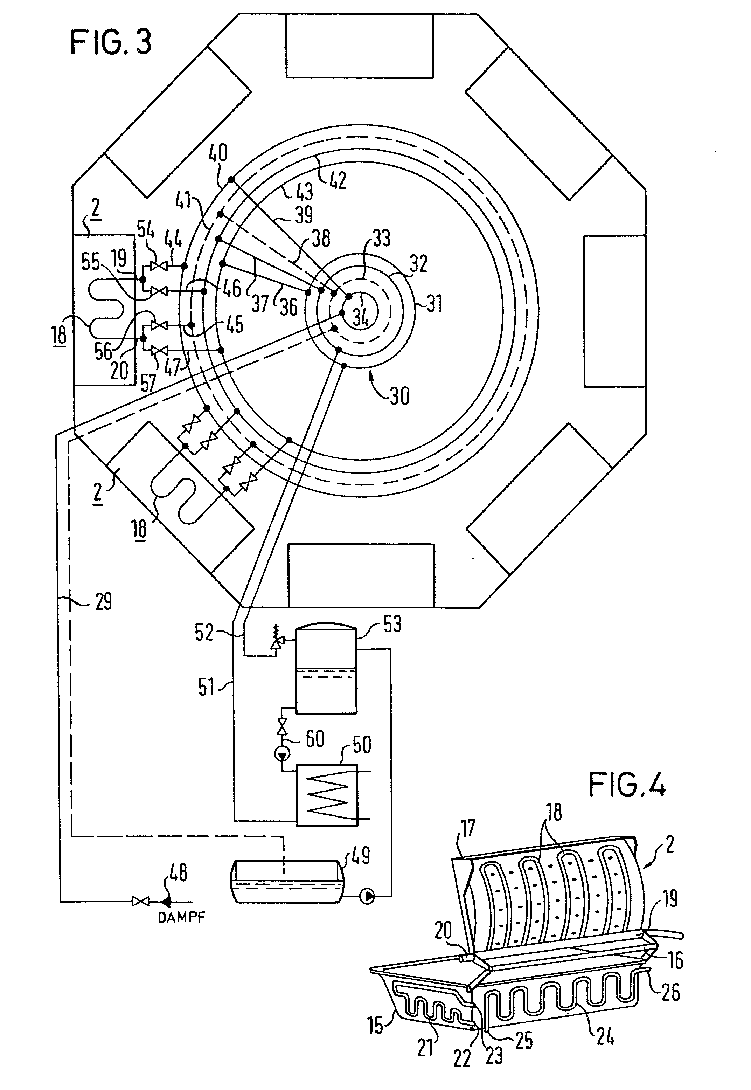

Auf der Oberseite des Grundrahmens 3 sind an seinem äußerem Umfang in entsprechender Zahl Halterahmen 14 für die Aufnahme der eigentlichen Formen 2 angebracht. Wie man in Fig. 4 erkennen kann, bestehen die Formen 2 aus zwei Teilen, und zwar aus einem Unterteil 15, das über Gelenkverbindungen 16 aufklappbar mit einem Deckelteil 17 verbunden ist.

Die Form 2 ist auf allen Seiten an ihren Oberfläche mit Kühlrohren versehen. Beispielsweise weist der Deckelteil 17 auf seiner Oberfläche Kühlrohre 18 auf, die jeweils an einem Ende mit einer zentralen Einlaßleitung 19 und an seinem anderen Ende mit einer verdeckt liegenden Auslaßleitung 20 verbunden sind. Auf der sichbaren Seitenfläche des Unterteils 15 sind ein weiteres Kühlrohr 21 mit seinem Einlaß 22 und seinem Auslaß 23 sowie auf der Rückseite des Unterteils 15 ein Kühlrohr 24 mit einem Einlaß 25 und einem Auslaß 26 vorgesehen.

Die Formen 2 bzw. deren Kühlrohre 18, 21 und 24 werden nacheinander zur Heizung mit Dampf oder zur Kühlung mit Kühlwasser beaufschlagt. Die verschiedenen Arbeitsmedien werden über einen zentralen Verteilerkopf 27 in der Drehachse des Tisches 1 zu- und abgeführt, wobei dieser Verteilerkopf 27 aus einem feststehenden Unterteil mit nicht näher dargestellten Zu- und Ableitungen 29 sowie einem mit dem Tisch 1 rotierenden Oberteil besteht, von dem die einzelnen Zuleitungen abgehen. Innerhalb dieses Verteilerkopfes 27 erfolgt der druck- und flüssigkeitsdichte Übergang vom feststehenden auf das rotierende System. Bei dem dargestellten Ausführungsbeispiel ist das Oberteil 30 von vier übereinanderliegenden Ringleitungen 31, 32, 33 und 34 umgeben, die über radiale Verbindungsleitungen 36 bis 39 mit radial innerhalb der Formen 2 übereinanderliegenden Verteilerleitungen 40 bis 43 in Verbindung stehen. Von diesen Verteilerleitungen 40 bis 43 führen entsprechende Anschlußleitungen 44 bis 47 zu den entsprechenden Ein- bzw. Auslässen der Kühlrohre an den Formen 2.

Außerdem befindet sich auf dem Tisch 1 ein schematisch angedeuteter, erster Rechner 11, der das Öffnen und Schließen sowie das Heizen und Kühlen der Formen 2 steuert, wie noch erläutert werden soll.

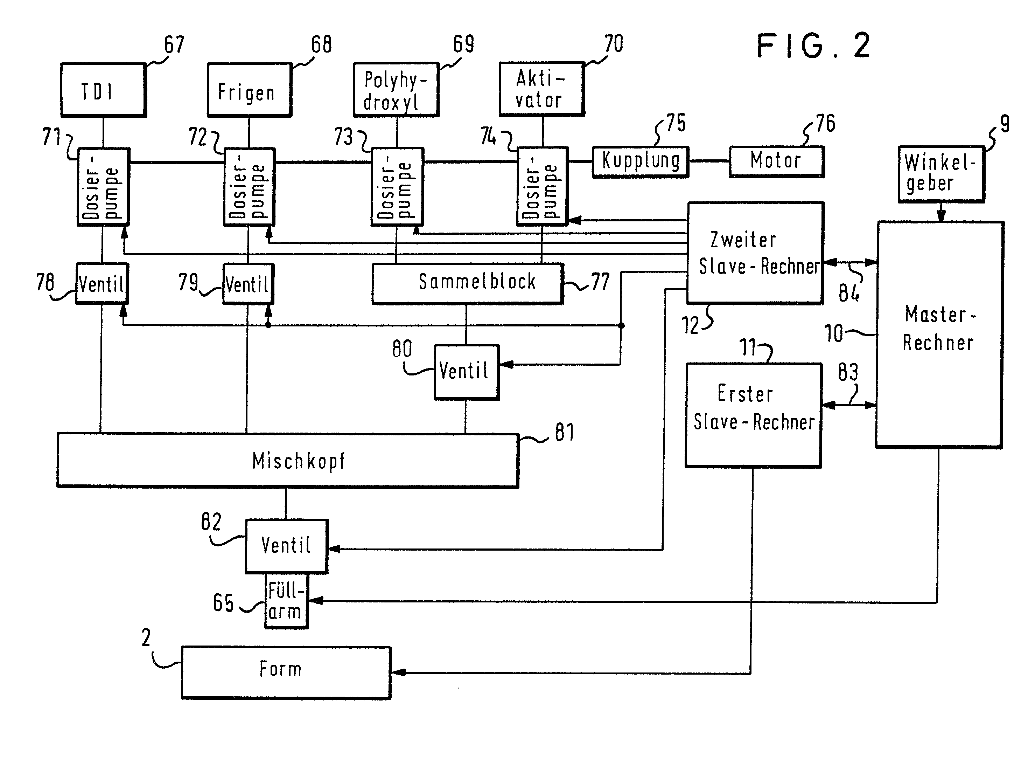

Außerhalb des drehbaren Tisches 1 ist ein stationärer Füllarm 65 so angeordnet, daß er sich über der geöffneten Form 2 befindet, die die Füllstellung erreicht hat; der Füllarm 65 ist mit der Rezepturzubereitung 13 verbunden, die später noch erläutert werden soll. Die Rezepturzubereitung 13 wird von einem zweiten Slave-Rechner 12 gesteuert. Die beiden Slave-Rechner 11 und 12 sind einem Master-Rechner 10 untergeordnet, wie man beispielsweise in Fig. 2 erkennen kann. Der Master-Rechner 10 ist mit einem Winkelgeber 9 verbunden, der als berührungsloser Impulsgeber ausgebildet sein kann und dem Master-Rechner pro Umlauf eine vorgegebene Zahl von Zählimpulsen, beispielsweise 1024 (0 ..... 1023) Zählimpulse zuführt. Diese Zählimpulse werden summiert und bilden als Zählerstand die Winkelstellung des Tisches 1 nach.

Einmal pro Umlauf wird die Zählung durch einen zweiten Impulsgeber wieder auf "0" gesetzt, d.h., synchronisiert.

Jedesmal, wenn der Master-Rechner 10 einen Zählimpuls empfängt, wird ein Interrupt-Befehl ausgelöst, der den Master-Rechner 10 zwingt, in einer Produktionsdatei nachzusehen, ob Schalthandlungen durchgeführt oder Steuerbefehle an den ersten bzw. zweiten Slave-Rechner 11 bzw. 12 abgegeben werden müssen, damit diese ihre zugehörigen Schalthandlungen durchführen können.

Die Verbindung zwischen dem ersten, auf dem Drehtisch 1 mitfahrenden Slave-Rechner 11 und dem Master-Rechner 10 erfolgt über ein nicht näher dargestelltes Schleifring-System.

In Fig. 3 ist der Kreislauf der verschiedenen Heiz- und Kühlmedien schematisch dargestellt. Der Heizdampf strömt von einer nicht näher dargestellten Dampfquelle 48 über eine der stationären Leitungen 29 und über den zentralen Verteilerkopf 27 in die diesen umgebende Ringleitung 34 und von hier aus über die radiale Verbindungsleitung 39 in die Verteilerleitung 40, von der aus der Dampf über die entsprechenden Anschlußleitungen 44 der einzelnen Formen 2 zu der Einlaßleitung 19 des Kühlrohrs 18 geführt wird. Aus dem Kühlrohr 18 strömt das Dampfkondensat über die Auslaßleitung 20, die Anschlußleitung 45, die Verteilerleitung 41¹, die radiale Verbindungsleitung 38 und die Ringleitung 33 in einen Kondensat-Sammelbehälter 49 zurück, von dem aus das Kondensat über einen nicht dargestell-Kessel wieder als Dampf 48 eingespeist wird.

Für den anschließenden Kühlvorgang strömt das Kühlwasser aus einem Kühler 50 über eine Verbindungsleitung 51 und den Verteilerkopf in die Ringleitung 32, von hier über die radiale Verbindungsleitung 37 in die Verteilerleitung 42 und von dort über die Anschlußleitung 46 zur gleichen Einlaßleitung 19 des Kühlrohrs 18, wodurch die Form 2 in der gewünschten Weise gekühlt wird. Das aufgewärmte Kühlwasser verläßt das Kühlrohr 18 über die Auslaßleitung 20, die Anschlußleitung 47, die Verteilerleitung 43, die radiale Verbindungsleitung 36 und strömt über die Ringleitung 31 und den Rückfluß 52 in das Kühlwassersammelgefäß 53, wo es über die Verbindungsleitung 60 im Kühler 50 rückgekühlt und anschließend wieder dem Kreislauf zugeführt wird.

Wie man weiterhin in Fig. 3 erkennen kann, weist jede Anschlußleitung 44 bis 47 ein eigenes Absperrventil 54 bis 57 auf. Diese Ventile werden zeitabhängig gesteuert, wie noch erläutert werden soll.

Fig. 2 zeigt ein Prinzipschema des Gesamtsystems, nämlich der drei Rechner 10, 11 und 12 sowie der von den Rechnern gesteuerten Komponenten. Dabei handelt es sich um die Form 2 einerseits und um die Rezepturzubereitung 13 andererseits, die in Fig. 2 im Detail dargestellt ist.

Diese Rezepturzubereitung enthält verschiedene Behälter für die Ausgangskomponenten des schäumbaren Reaktionsgemisches, nämlich beispielsweise einen Behälter 67 für TDI, einen Behälter 68 für Frigen, einen Behälter 69 für Polyhydroxyl und einen Behälter 70 für einen Aktivator. Aus diesen Ausgangskomponenten kann beispielsweise ein Heißschaum hergestellt werden. Selbstverständlich können auch weitere Ausgangskomponenten hinzugefügt oder andere Ausgangskomponenten verwendet werden.

Jeder Behälter 67 bis 70 ist mit einer Dosierpumpe 71 bis 74 verbunden, die jeweils über eine Kupplung 75 an einen kontinuierlich laufenden Motor 76 angeschlossen ist. Durch Unterbrechen der Kupplung 75 kann also die Antriebsverbindung aufgehoben werden. Bei eingerückter Kupplung laufen die Dosierpumpen 71 bis 74 kontinuierlich.

Die Dosierpumpen 71 bis 74 sind mit nicht näher dargestellten Schrittmotoren versehen, die jeweils von dem zweiten Slave-Rechner 12 vorgegebene Nonius-Einstellungen der Dosierpumpen 71 bis 74 ansteuern.

Die Dosierpumpen 71 und 72 fördern TDI bzw. Frigen über Ventile 78 und 79 zu einem Mischkopf 81, während die Dosierpumpen 73 und 74 das Polyhydroxyl bzw. den Aktivitator zu einem Sammelblock 77 und von diesem über ein Ventil 80 zu dem Mischkopf 81 führen. An den Ausgang des Mischkopfes 81 ist über ein weiteres Ventil 82 der Füllarm 65 angeschlossen, der die jeweils in dem Mischkopf 81 befindliche Rezeptur in die unter dem Füllarm 65 befindliche Form 2 einfüllt.

Die Ventile 78, 79, 80 und 82 werden ebenfalls durch den zweiten Slave-Rechner 12 gesteuert.

Die Verbindungsleitungen 83 und 84 zwischen dem Master-Rechner 10 einerseits und dem ersten bzw. zweiten Slave-Rechner 11 bzw. 12 andererseits sind schematisch durch die Pfeile angedeutet.

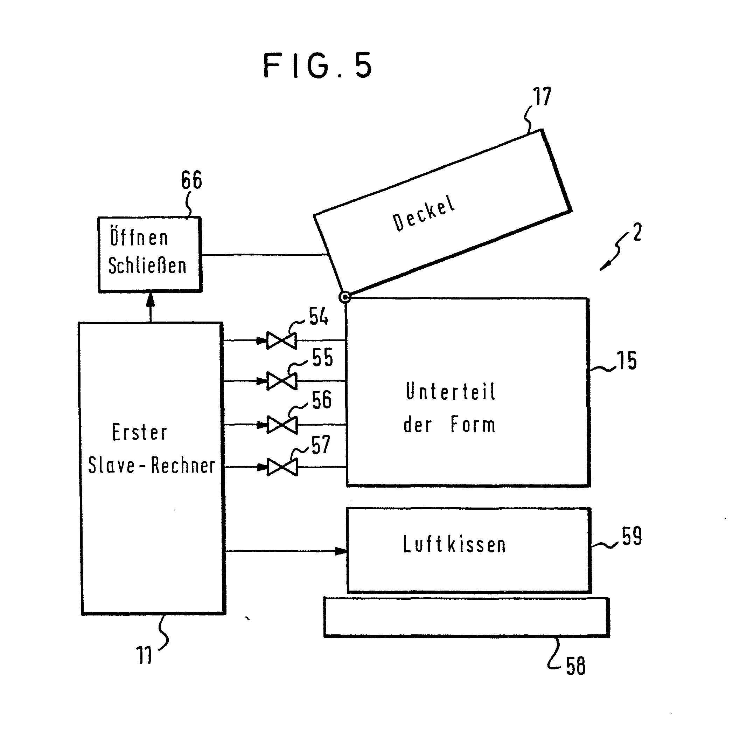

In Fig. 5 sind schematisch der ersten Slave-Rechner 11 und eine Form 2 mit dem Unterteil 15 und dem Deckelteil 17 dargestellt. Unter dem Unterteil 15 befindet sich ein Luftkissen 59, das auf einer Grundplatte 58 aufliegt. Außerdem sind die verschiedenen Absperrventile 54 bis 57 für die Heiz- und Kühlmedien angedeutet, die von dem ersten Slave-Rechner 11 gesteuert werden. Schließlich ist noch ein Mechanismus 66
für das Öffnen und Schließen des Deckelteils 17 der Form
2 dargestellt.

Im folgenden soll die Funktionsweise dieser Formschaumanlage erläutert werden.

Wie bereits oben angedeutet wurde, steuert der Master-Rechner 10 den außerhalb des Tisches 1 ablaufenden Prozeß und
ist den beiden Slave-Rechnern 11 und 12 übergeordnet.

Die Hauptaufgabe des Masterrechners 10 besteht darin, alle
Prozeßabläufe zu koordinieren und alle für den Produktionsprozeß notwendigen variablen Parameter zu verwalten. Anhand dieser Produktionsparameter muß er zum richtigen Zeitpunkt Steuerfunktionen und Schalthandlungen ausführen und
zu den beiden Slave-Rechnern 11 und 12 Steuerbefehle überspielen, damit diese ebenfalls ihre Steuerfunktionen und
Schalthandlungen ausführen können.

Der äußere Prozeß eines solchen rotierenden Tisches 1 enthält die folgenden Steuerfunktionen, die nur vom Master-
Rechner 10 übernommen werden:

a) Positionierung des Füllarms 65 mittels eines Eintragsportals bei Erreichen der Füllstellung; weist die
   Formschaumanlage wie bei dem darstellten Ausführungsbeispiel kein Eintragsportal auf, so wird dieser Programmteil des Master-Rechners 10 übersprungen;
b) Auslösen der Servoverstellung für die Dosierpumpen
   71 bis 74 mit Hilfe des zweiten Slave-Rechners 12,
   d.h. Übergabe der Sollwerte der Verstellparameter
   und anschließende Kontrolle, ob die Verstellung
   ordnungsgemäß abgelaufen ist;
c) Ansteuerung der Kupplung 75, so daß diese für eine
   vorgegebene Zeitspanne einrastet;

d) Ausblasen des Mischkopfes 81 nach Beendigung des Füllvorgangs;

e) Übergabe von Steuerbefehlen an die beiden Slave-Rechner 11 und 12;

f) Empfang von Zählimpulsen und Nullimpulsen als Information über die Winkellage des Tisches 1; und

g) Selbstverwaltung des Master-Rechners.10.

Alle variablen Daten, die für den Produktionsprozeß notwendig sind, werden nur in den Masterrechner 10 eingegeben, gespeichert und verwaltet. Alle Daten, die für die Produktion eines Formteils benötigt werden, stehen in einer "Form-Datei". Über ein spezielles Dialog-Programm können diese Form-Dateien angelegt, geändert und auch wieder gelöscht werden.

Aus diesen aktuellen Form-Dateien, die sich beispielsweise in batteriegepufferten RAM-Speichern befinden,, wird durch den Master-Rechner 10 eine Produktions-Datei erstellt, die, ausgelöst durch die Zählimpulse des Winkelgebers 9, einmal pro Umdrehung des Tisches 1 Schritt für Schritt durchlaufen wird .

Der erste Slave-Rechner 11 ist dem Master-Rechner 10 untergeordnet und steuert den inneren, d.h., den auf dem Tisch 1 ablaufenden Prozeß. Die Hauptaufgabe des ersten Slave-Rechners 11 liegt darin, Steuerbefehle von dem Masterrechner 10 zu empfangen und die entsprechenden Schalthandlungen durchzuführen. Der erste Slave-Rechner 11 bekommt seine Steuerbefehle nur vom Masterrechner 10, so daß er keine zusätzlichen Daten empfangen muß.

Zur Steuerung des inneren Prozesses benötigt der erste Slave-Rechner 11 zeitabhängige Maßnahme sowie positionsabhängige Maßnahmen. Positionsabhängige Maßnahmen werden bei einer bestimmten Winkelstellung des Tisches 1 ausgeführt, hängen also von der Bewegung des Tisches 1 ab. Zeitabhängige Maßnahmen werden zu einem bestimmten Zeitpunkt ausgeführt, also unabhängig davon, ob sich der Tisch 1 dreht oder nicht.

Der innere Prozeß ist durch folgende Schalthandlungen definiert:

a) Bei Erreichen einer bestimmten Stellung wird die Form 2 geschlossen, und zwar entweder vor dem Füllen oder unmittelbar nach dem Füllen;

b) unmittelbar nach dem Schließen der Form 2 nach dem Füllen wird das Luftkissen 59 mit Luft beaufschlagt, wodurch der Unterteil 15 der Form 2 gegen den Deckel 17 gedrückt und damit die Form 2 abgedichtet wird;

c) die Zähler für die "Dampfzeit 1" und "Dampfzeit 2" werden gestartet; dabei wird als "Dampfzeit 1" die Verzögerungszeit bezeichnet, nach der die Dampfventile 54 und 56 geöffnet werden sollen; die "Dampfzeit 2" legt fest, wie lange die Dampfventile 54 und 56 geöffnet bleiben sollen. Diese beiden Maßnahmen sind also zeitabhängige Maßnahmen;

d) bei Erreichen einer bestimmten Stellung wird das Luftkissen 59 wieder entspannt und anschließend die Form 2 geöffnet;

e) bei Erreichen einer bestimmten Stellung wird die Kühlung der Form 2 eingeleitet; und

f) die Kühlung der Form 2 wird bei Erreichen einer bestimmten Stellung beendet.

Alle diese Maßnahmen können für jede Form 2, die sich auf dem Tisch 2 befindet, frei vorgegeben werden. Damit läßt sich jede Form 2 individuell steuern.

Damit der erste Slave-Rechner 11 diese Maßnahmen durchführen kann, empfängt er von dem Master-Rechner 10 pro Umlauf des Tisches 1 etwa 120 Steuerbefehle über ein Schleifringsystem.

Jeder Steuerbefehl wird auf Paritätsfehler, Überlauffehler und Sperrschrittfehler geprüft. Außerdem wird noch eine logische Prüfung der übergebenen Parameter durchgeführt, und zwar im Hinblick darauf, ob diese Daten sinnvoll sind.

Sind keine Fehler beim Übertragen aufgetreten oder bei der logischen Prüfung entdeckt worden, quittiert der Slave-Rechner 11 den ordnungsgemäßen Empfang.

Wird ein Fehler festgestellt, so wird ein Fehlerlämpchen gesetzt und der Master-Rechner 10 zur nochmaligen Übertragung der Steuerbefehle aufgefordert. Insgesamt wird ein Steuerbefehl bis zu drei mal übertragen. Ist dann die Übertragung immer noch nicht einwandfrei, so wird die Übertragung abgebrochen und der Tisch 1 angehalten.

Die Hauptaufgabe des zweiten Slave-Rechners 12 liegt darin, die Verstellung der Dosierpumpen 71 bis 74 vorzunehmen. Sobald eine Form 2 die Füllstellung erreicht, wird die Verstellung der Dosierpumpen 71 bis 74 ausgeführt, d.h., die Ist-Werte der Nonius-Einstellungen der Schrittmotoren der Dosierpumpen 71 bis 74 werden über Winkelkodierer in den Master-Rechner 10 eingelesen. Aufgrund der bereits eingegebenen Sollwerte berechnet der Masterrechner 10 die Verstellwerte, die dann dem zweiten Slave-Rechner 12 zugeführt werden. Dieser steuert die Schrittmotoren an und verstellt entsprechend der Sollwerte ihre Noniuseinstellungen.

Nach der Verstellung werden alle Ist-Werte vom Master-Rechner 10 nochmals überprüft und eine eventuell notwendige Korrektur vorgenommen. Bei dieser Verstellung wird das Spindelspiel der Schrittmotoren berücksichtigt, indem nur in einer Richtung, nämlich von unten nach oben, angefahren wird.

Ist die Verstellung abgeschlossen, wird der Füllvorgang freigegeben, indem die Ventile 78, 79, 80 und 82 geöffnet und dadurch die Form 2 mit der entsprechenden Rezeptur gefüllt werden.

Es besteht die Möglichkeit, noch während des laufenden Füllvorganges auf die nächste Rezeptureinstellung zuzustellen. Zu diesem Zweck kann mittels der sogenannten "Pumpenvorverstellzeit" genau die Zeitspanne vorgegeben werden, um die vor Ablauf der momentanen Füllzeit die Verstellung auf die nächste Rezeptur vorgenommen werden soll.

Diese Maßnahme soll einem zu krassen Rezepturübergang entgegenwirken, so daß die gerade zu füllende Form 2 sowie die als nächste zu füllende Form 2 jeweils einen Teil des Rezepturübergangs übernehmen.

Erst wenn die Verstellung abgeschlossen ist, wird der Füllvorgang freigegeben. Bei gleicher Rezeptur von Form zu Form wird keine Verstellung vorgenommen; ändert sich der Anteil einer einzigen Ausgangskomponente, so wird auch nur die entsprechende eine Dosierpumpe verstellt.

Im folgenden soll die Funktionsweise dieser Formschaumanlage erläutert werden.

Der Füllzeitpunkt für eine Form wird durch eine bestimmte Stellung der bewegten Form 2 in Bezug auf den stationären Füllarm 65 vorgegeben, d.h., der Füllzeitpunkt kann durch eine bestimmte Zahl der von dem Winkelgeber 9 erzeugten Zählimpulse definiert werden. Wird diese Zahl von Zählimpulsen erreicht, so heißt das, daß sich die Form 2 im Bereich des Füllarms 65 befindet und deshalb gefüllt werden kann.

Wird der Füllzeitpunkt erreicht, so wird ein eventueller Auslaßvorgang des Mischkopfes 81 unterbrochen.

Befindet sich die Form 2 im Füllbereich, d.h., unter dem Füllarm 65, so kann während einer vorgegebenen Zeitspanne das Einfüllen der Rezeptur durchgeführt werden. Diese "Füllbereitdauer" hängt im wesentlichen von der Dichte der Belegung ab, d.h., sobald die nächste Form einläuft, muß die Füllung für die vorhergehende Form unterbrochen werden.

Vor dem Einfüllen der Rezeptur verstellt, falls erforderlich, der zweite Slave-Rechner 12 die Dosierpumpen 71 bis 74 auf das neue Rezept. Erst anschließend wird der Füllarm und damit die Füllmaßnahme freigegeben.

Die Verstellung der Dosierpumpen 71 bis 74 erfolgt in der Weise, daß die gewünschte Noniuseinstellung immer nur von einer Seite her angefahren wird, d.h., von einer kleineren Noniuseinstellung auf eine größere. Wird von einer größeren Noniuseinstellung auf eine kleinere verstellt, dann wird diese kleinere Stellung zunächst um eine Umdrehung unterfahren und anschließend wieder hochgefahren. Auf diese Weise läßt sich das Spindelspiel der Dosierpumpen 71 bis 74 ausgleichen.

Werden mehrere Formen mit der gleichen Rezeptur gefüllt, so ist eine Verstellung der Dosierpumpen 71 bis 74 nicht erforderlich.

Werden verschiedene, aufeinanderfolgende Formen 2 mit unterschiedlichen Rezepturen gefüllt, so kann noch während des Einfüllvorgangs, also vor der Beendigung einer Füllmaßnahme, die Rezepturzubereitung auf die Rezeptur für die nächste einlaufende Form 2 zugestellt werden, wobei die erwähnte "Pumpenvorverstellzeit" ausgenutzt wird. Dadurch läßt sich ein besserer Rezepturübergang erreichen, wobei die Rezeptmenge, in der der Übergang von der ersten auf die zweite Rezeptur erfolgt, je nach Wunsch auf die beiden benachbarten Formen verteilt wird. Die genaue Pumpenvorverstellzeit muß empirisch ermittelt werden und kann von Form zu Form unterschiedlich sein.

Nach Beendigung der Verstellung der Dosierpumpen 71 bis 74 erfolgt der eigentliche Füllvorgang durch Ankupplung des Motors 76 an die Dosierpumpen 71 und 74 sowie Öffnen der Ventile 78, 79, 80 und 82. Dadurch wird eine genau vorgegebene Menge des schäumbaren Reaktionsgemisches in die jeweils in der Füllstellung befindliche Form 2 eingefüllt.

Solange Mehrfachformen gefüllt werden, erfolgt automatisch nach Beendigung der ersten Füllung die Füllbereitschaft für die zweite bzw. weitere folgende Füllungen Zwischen diesen Füllbereitdauern wird der Mischkopf nicht ausgeblasen. Das Ausblasen des Mischkopfes erfolgt erst nach der letzten Füllung. Dann wird auch erst die Pumpenvorverstellung durchgeführt.

Nach Beendigung einer Füllmaßnahme wird der Mischkopf 81 automatisch durch eine nicht dargestellte Vorrichtung ausgeblasen; dies erfolgt jedoch erst dann, wenn der Mischkopf 81 in seiner Endstellung, d.h. in die Absaugvorrichtung gebracht worden ist. Der Ausblasvorgang dauert ca. 15 sek., kann bei Bedarf jedoch von Hand, nämlich über einen Blasschalter, verlängert werden.

Erreicht die nächste Form die Füllstellung, so wird der Ausblasvorgang abgebrochen.

Ist die Füllmaßnahme abgeschlossen und der Füllarm 65 in seine Endstellung gebracht worden, so wird die Form 2 selbsttätig durch den ersten Slave-Rechner 11 geschlossen.

Befindet sich der Füllarm 65 nicht in seiner Endstellung, so ist das Schließen der Form 2 nicht möglich. Diese zusätzliche Maßnahme ist aus sicherheitstechnischen Gründen erforderlich.

Etwa 4 sek. nach dem selbsttätigen Schließen der Form legt der erste Slave-Rechner 11 Druck an das Luftkissen 59, das sich unter dem Unterteil 15 der Form 2 befindet, so daß das Unterteil 15 gegen den Deckel 17 gedrückt und damit die Form 2 abgedichtet wird.

Nach Verstreichen der oben erläuterten Dampfzeit 1 werden die Ventile 54 und 56 für eine vorgegebenen Zeitspanne von dem ersten Slave-Rechner 11 geöffnet, so daß der Dampf durch die entsprechenden Heizrohre fließt und damit die Form 2 erwärmt wird. Die Ventile 54 und 56 bleiben während der "Dampfzeit 2" geöffnet.

Bei Erreichen einer bestimmten Stellung der Form wird das Luftkissen 2 von dem ersten Slave-Rechner 11 wieder entspannt und anschließend der Deckel 17 der Form 2 geöffnet. Dann werden die Ventile 55 und 57 geöffnet, so daß unter Überdruck stehendes Wasser durch die entsprechenden Kühlschlangen fließen und damit die Form 2 kühlen kann. Der Zeitpunkt und die Zeitdauer dieser Kühlströmung wird ebenfalls durch den ersten Slave-Rechner 11 festgelegt.

Sobald die Form 2 ausreichend abgekühlt ist, kann das fertige Formteil entnommen werden. Bei Erreichen der Füllstellung beginnt der erwähnte Zyklus von neuem.

Der Master-Rechner 10 kann so ausgelegt werden, daß er auch zur Datenerfassung dient. Zu diesem Zweck kann der Master-Rechner 10 beispielsweise die folgenden Daten-Telegramme erzeugen:

a) Produktions-Telegramme aus der Artikel-Nummer, der Schicht-Kennung und der Anlagen-Nummer; dieses Telegramm wird nach jedem Einfüllvorgang gesendet;

b) Störungs-Telegramm, bestehend aus der Art der Störung, der Schicht-Kennung, der Zahl der Personen, die an der Formschaumanlage arbeiten, und der Anlagen-Nummer. Dieses Telegramm wird nur bei Störung einer Anlage, und zwar im 10-Minuten-Takt, vom Masterrechner erzeugt;

c) Ist-Zeit-Diagramm, bestehend aus der Zahl der Personen, die an der Anlage arbeiten, der Schichtkennung und der Anlagennummer. Auch dieses Telegramm wird nur alle 10 Minuten ausgegeben.

Die notwendigen Kenngrößen, wie Zahl der Personen, Schichtkennung oder Störungskennung, können über Schalter eingegeben werden. Die Anlagennummer sollte im Programm fest vorgegeben werden.

Durch die Ausgabe der entsprechenden Daten läßt sich die Zahl und Art der hergestellten Formteile und damit die Produktivität der Formschaumanlage sehr exakt praktisch ohne jede zeitliche Verzögerung überwachen.

Patentansprüche

1. Formschaumanlage mit
   a) mehreren, auf einem drehbaren Tisch angeordneten
      Formen, mit
   b) einer Heizung und einer Kühlung für jede Form, und
   c) mit einer stationären Vorrichtung zur Einfüllung einer vorgegebenen Menge eines schäumbaren Reaktionsgemisches aus mehreren Ausgangskomponenten in jede
      Form,
g e k e n n z e i c h n e t   d u r c h

   d) einen ersten Rechner (11) zum positionsabhängigen
      Öffnen und Schließen jeder Form (2) und zur zeitabhängigen Steuerung der Heizung und Kühlung jeder
      Form (2), und durch
   e) einen zweiten Rechner (12) zur positionsabhängigen
      Steuerung der Einfüllvorrichtung (65, 81, 82).

2. Formschaumanlage nach Anspruch 1, gekennzeichnet durch einen
Master-Rechner (10), der den beiden, als Slave-Rechnern ausgebildeten Rechnern (11, 12) übergeordnet ist.

3. Formschaumanlage nach einem der Ansprüche 1 oder 2, dadurch
gekennzeichnet, daß der erste Rechner (11) ein unter der Form
(2) angeordnetes Luftkissen (59) ansteuert.

4. Formschaumanlage nach einem der Ansprüche 1 bis 3, gekennzeichnet durch einen Winkelgeber (9) für die Lage des Tisches (1)
zur Erzeugung von die Winkellage des Tisches (1) darstellenden und die entsprechenden Funktionen auslösenden Impulsen.

5. Formschaumanlage nach mindestens einem der Ansprüche 1 bis
4, dadurch gekennzeichnet, daß die Einfüllvorrichtung eine Dosierpumpe(71 bis 74) für jede Ausgangskomponente aufweist,
die über eine Kupplung (75) mit einem kontinuierlich laufenden Motor (76) verbunden ist.

6. Formschaumanlage nach Anspruch 5, dadurch gekennzeichnet,
daß jede Dosierpumpe (71 bis 74) einen Schrittmotor enthält,
dessen Nonius von dem zweiten Rechner (12) verstellt wird.

7. Formschaumanlage nach mindestens einem der Ansprüche 5
oder 6, dadurch gekennzeichnet, daß zwischen den Dosierpumpe (71 - 74) und einem Mischkopf (81) von dem zweiten Rechner (12) gesteuerte Ventile (78, 79, 80) vorgesehen sind.

8. Formschaumanlage nach Anspruch 7, dadurch gekennzeichnet,
daß ein weiteres, von dem zweiten Rechner (12) gesteuertes
Ventil (82) zwischen dem Mischkopf (81) und einem verstellbaren Füllarm (65) vorgesehen ist.

9. Formschaumanlage nach mindestens einem der Ansprüche 1
bis 8, dadurch gekennzeichnet, daß der erste Rechner (11)
auf dem drehbaren Tisch (1) angeordnet ist.

10. Formschaumanlage nach mindestens einem der Ansprüche
2 bis 9, dadurch gekennzeichnet, daß der Master-Rechner (10)
und der zweite Rechner (12) stationär außerhalb des drehbaren
Tisches (1) angeordnet sind.

FIG.1

0065753

1/4

1. Slave Rechner

Winkel-geber 9

Füllarm 65

Master-Rechner 10

84

Rezeptur zubereitung 13

2 Slave Rechner 12

FIG. 2

TDI 67
Frigen 68
Polyhydroxyl 69
Aktivator 70

71 Dosierpumpe
72 Dosierpumpe
73 Dosierpumpe
74 Dosierpumpe

Kupplung 75
Motor 76

Winkelgeber 9

78 Ventil
79 Ventil

Sammelblock 77

80 Ventil

Zweiter Slave-Rechner 12

84

Master-Rechner 10

Erster Slave-Rechner 11

83

81 Mischkopf

82 Ventil

65 Füllarm

2 Form

2/4

0065753

FIG. 3

FIG.4

DAMPF

# FIG. 5